# EUROPÄISCHE PATENTSCHRIFT

(11) **EP 1 131 924 B1**
(45) Veröffentlichungstag und Bekanntmachung des Hinweises auf die Patenterteilung: **19.05.2004**
(21) Anmeldenummer: 99960911.8
(22) Anmeldetag: 17.11.1999
(51) Int. Cl.: H04L 12/56

(54) **VERFAHREN ZUM UNTERBRECHUNGSFREIEN ERWEITERN DES KOPPELFELDES EINES KOMMUNIKATIONSSYSTEMS**
METHOD FOR EXPANDING THE SWITCHING NETWORK OF A COMMUNICATIONS SYSTEM WITHOUT INTERRUPTING OPERATION
PROCEDE PERMETTANT L'EXTENSION SANS INTERRUPTION DU COMMUTATEUR D'UN SYSTEME DE COMMUNICATION

(30) Priorität: 17.11.1998 DE 19853068
(43) Veröffentlichungstag der Anmeldung: 12.09.2001
(73) Patentinhaber: SIEMENS AKTIENGESELLSCHAFT, 80333 München (DE)
(72) Erfinder: STEINIGKE, Klaus, D-81369 München (DE); STELZL, Rudolf, D-85221 Dachau (DE); RAU, Peter, D-81241 München (DE); BELGARDT, Eckhardt, D-81737 München (DE)
(86) Internationale Anmeldenummer: PCT/DE1999/003655
(87) Internationale Veröffentlichungsnummer: WO 2000/030300

(56) Entgegenhaltungen:
- US-A- 5 325 089
- US-A- 5 325 090
- US-A- 5 802 052
- FISCHER W ET AL: "A SCALABLE ATM SWITCHING SYSTEM ARCHITECTURE" IEEE JOURNAL ON SELECTED AREAS IN COMMUNICATIONS,US,IEEE INC. NEW YORK, Bd. 9, Nr. 8, 1. Oktober 1991 (1991-10-01), Seiten 1299-1307, XP000267581 ISSN: 0733-8716

## Beschreibung

Die Erfindung betrifft ein Verfahren gemäß dem Oberbegriff von Patentanspruch 1.

Als zentraler Bestandteil eines Kommunikationssystems ist in der Regel das Koppelfeld anzusehen.Letzteres weist eine Mehrzahl von Baugruppen auf, durch die die Informationen aller Verbindungen geleitet werden. Soll ein Kommunikationssystem in seiner Durchschaltekapazität erweitert werden, ist vor allem das Koppelfeld als zentraler Bestandteil zu vergrößern. Dies gilt insbesondere auch für Koppelfelder, die in ATM-Zellen gepackte Informationen durchschalten und übertragen.

Zeitgemäße ATM-Koppelfelder werden erweitert, indem die alten Koppelfeldkomponenten durch neue Komponenten ersetzt werden. Eine Erweiterung in dem Sinne, daß zu den alten Komponenten neue modulartig hinzugefügt werden, wobei die alten Komponenten nach wie vor verwendet werden können, wird nur selten durchgeführt. Das Koppelfeld muß damit in der Regel komplett umgebaut werden.

Dies hat Konsequenzen sowohl für das Betriebssystem als auch die Wegeinformation der durchzuschaltenden ATM-Zellen. Insbesondere die Routingadressen, die der ATM-Zelle innerhalb des Koppelfeldes den Weg weisen, sind nach dem Wechsel des Koppelfeldes in entsprechender Weise zu ändern. Dies kann während des Betriebes des Koppelfeldes nicht oder nur mit großem Aufwand erreicht werden. Bei diesem Stand der Technik wird somit zum Erweitern des Koppelfeldes der Betrieb unterbrochen und das Koppelfeld komplett abgeschaltet. Damit kann dann das Koppelfeld gewechselt und die Routingadressen geändert werden.

Aus der Druckschrift "A Scalable ATM Switching System Architecture", Wolfgang Fischer et al., IEEE Journal of Selected Areas in Communications, 9(1991) October, No.8, New York, US ist die Architektur eines ATM Vermittlungssystems offenbart.

Weiterhin ist der US Patentschrift US 5,325,089 ebenfalls ein erweiterbares ATM Kopplenetz entnehmbar. Die Erweiterung wird hier detailliert in dem Sinne beschrieben, wie die einzelnen Stufen miteinander zu verdrahten sind.

Der Erfindung liegt die Aufgabe zugrunde, einen Weg aufzuzeigen, wie eine Erweiterung von Koppelfeldern ohne Störung des Betriebs möglich ist.

Die Erfindung wird ausgehend von den im Oberbegriff von Patentanspruch 1 angegebenen Merkmalen durch die Merkmale des kennzeichnenden Teils gelöst.

Vorteilhaft an der Erfindung ist insbesondere, daß genügend Speicherplatz für die Routingadressen vorgehalten wird. Weiterhin wird dafür Sorge getragen, daß die Routingadressen der ATM-Zellen für jeden Koppelfeldtyp identisch sind. In der Praxis bedeutet dies, daß bereits bei Inbetriebnahme des Koppelfeldes die Routingadresse immer für den größten Koppelfeldtyp ausgelegt ist. Die Routingadressen für die Wege über die neuen Koppelfeldbaugruppen bleiben somit gegenüber den alten unverändert. Damit können bestehende Verbindungen unverändert bestehen bleiben und für Wege über den erweiterten Teil des Koppelfeldes, für die die bereits vorgehaltenen erweiterten Routingadressen genutzt werden, brauchen nur noch die erweiterten Routingadressen im erweiterten Speicherplatz eingetragen zu werden. Der Wechsel des Koppelfeldes erfolgt dann unter Zuhilfenahme eines System Splits. Mit einer derartigen Vorgehensweise ist der Vorteil verbunden, daß der Wechsel währedn des laufenden Betriebes erfolgen kann und bestehende Verbindungen nicht abgebrochen werden müssen.

Vorteilhafte Weiterbildungen der Erfindung sind in den Unteransprüchen angegeben.

Die Erfindung wird im folgenden anhand einer Figur näher erläutert.

Demgemäß ist ein Koppelfeld ASN aufgezeigt, das in 2 Hälften ASN₀ und ASN₁ aufgespalten ist. Weiterhin sind redundant angeordnete Baugruppen AMX, SMU, und ASNCORE aufgezeigt, die jeweils die Koppelfeldhälften ASN₀ und ASN₁ bilden. Die Baugruppem AMX sind als ATM Multiplexer ausgebildet, deren Aufgabe darin besteht, ATM-Zellenströme auf die nachfolgenden Einrichtungen SMU zu multiplexen. Auf letzteren gelangen statistische Multiplexverfahren zum Ablauf, nach deren Vorschrift ATM-Zellen einem (nicht näher aufgezeigten) Speicher entnommen und den nachgeschalteten Einrichtungen zugeführt werden. Die Einrichtungen ASNCORE stellen den Kern des Koppelfeldes ASN dar, der für die Durchschaltung der Verbindungen verantwortlich ist. Die eingangsseitigen Einrichtungen AMX, SMU₀, ASNCORE der Koppelfeldhälfte ASN₀ sind über redundant ausgebildete Bündelleitungen B₀, B₁ miteinander verbunden. Gleiches gilt für die ausgangsseitigen Einrichtungen ASNCORE, SMU₀, AMX der Koppelfeldhälfte ASN₀. Bei den Verbindungen der eingangs - und ausgangsseitigen Einrichtungen der Koppelfeldhälfte ASN₁ wird in analoger Weise vorgegangen. Eingangs - und ausgangsseitig des Koppelfeldes ASN sind Schnittstelleneinrichtungen LIC angeordnet, die der Aufnahme und Abgabe der ATM-Zellen dienlich sind.

Die ankommenden ATM-Zellen werden in den Schnittstelleneinrichtungen LIC in 2 identische ATM-Zellenströme aufgespalten und über die jeweils eingangsseitigen, redundant angeordneten Einrichtungen AMX, SMU, ASNCORE den ausgangsseitigen, ebenfalls redundant angeordneten Einrichtungen AMX, SMU, zugeführt, wo sie über die ausgangsseitigen Schnittstelleneinrichtungen LIC weitergeleitet werden. Dort gelangt ein Algorithmus RPC zum Ablauf, von dem entschieden wird, welche der ankommenden identischen ATM-Zellen weitergeleitet wird.

Eine Verbindung zwischen 2 Teilnehmern wird nun aufgebaut, indem zunächst eine Signalisierungszelle vom sendenden Teilnehmer zum empfangenden Teilnehmer übertragen wird. Hierbei wird der Weg festgelegt, den die ATM-Zellen später nehmen sollen. Die Ermittlung dieses Weges wird von einem zentralen Rechner CP gesteuert und abgespeichert. Damit hat dieser ein aktuelles Abbild aller Verbindungen.

Weiterhin werden Routingadressen festgelegt. In der Routingadresse wird der Ausgangsport des Koppelfeldes festgelegt. Ist beispielsweise die ausgangsseitig angeordenete Einrichtung AMX an Port 10 des Koppelfeldes ASN angeschlossen, steht in diesem Fall '10'in der Routingadresse. Anhand der Routingadressen 'weiß' das Koppelfeld ASN selbständig, zu welchem Port die ATM-Zelle geroutet werden muß. Die Routingadresse ist ferner Teil eines internen Zellenkopfes, der in der Schnittstelleneinrichtung LIC der ATM-Zelle vorangestellt wird.

Die in einer eingangsseitigen Schnittstelleneinrichtung LIC ankommenden ATM-Zellen eines Zellenstromes werden nun mit dem internen Zellenkopf, in dem u.a. der Weg durch das Koppelfeld in Form einer Routingadresse festgelegt ist, beaufschlagt. In der Routingadresse ist der Ausgang festgelegt, über den die bestreffende ATM-Zelle das Koppelfeld ASN wieder verläßt. Ferner wird der Zellenstrom in 2 redundante Zellenströme Z₀, Z₁ aufgespalten. Beide Zellenströme werden dann über unterschiedliche Wege dem betreffenden Ausgang zugeführt. Die diesem zugeordnete ausgangsseitige Schnittstelleneinrichtung LIC nimmt beide Zellenströme Z₀, Z₁ auf. Von einem darin ablaufenden Algorithmus RPC wird dann entschieden, welche der redundanten ATM-Zellen weiteren Einrichtungen zugeführt wird.

Weiterhin werden bei Inbetriebnahme alle Einrichtungen des Kommunikationssystems initialisiert und hochgefahren. Diese Vorgänge werden ebenfalls von dem zentralen Rechner CP gesteuert. Ferner wird die Breite der Routingadresse im internen Zellenkopf durch die Hardware festgelegt. Diese Breite wird den Baugruppen in einer Headertranslationtabelle zugewiesen.

Erfindungsgemäß ist nun vorgesehen, daß bei der Inbetriebnahme des Kommunikationssystems genügend Speicherplatz für die spätere Erweiterung der Routingadresse vorgehalten wird.

Dies erfolgt, indem der eigentlichen Adresse eine oder mehrere Nullen vorangestellt werden.

Zum Wechsel des Koppelfeldes wird zunächst ein Systemsplit durchgeführt. Dabei wird zunächst eine Hälfte z.B. ASN₀ des Koppelfeldes ASN per Softwarekommando abgeschaltet. Der über die Hälfte ASN₀ geleitete Verkehr wird dann unterbrochen. Die über die redundant zugeordnete zweite Hälfte z.B. ASN₁ geleiteten Zellenströme werden vom Algorithmus RPC weitergeleitet. Sind die neuen Baugruppen der ersten Hälfte ASN₀ installiert, werden diese neuen Baugruppen schrittweise getestet und aktiviert. Sobald alle Baugruppen der ersten Hälfte aktiv sind, wird der Verkehr wieder über beide Hälften übertragen. In diesem Zwischenzustand wird damit das Koppelfeld (kurzzeitig) mit einer aus alten Koppelfeldbaugruppen bestehenden Koppelfeldhälfte und einer aus neuen Koppelfeldbaugruppen bestehenden Koppelfeldhälfte betrieben.

Im weiteren wird dann die zweite Hälfte z.B. ASN₁ abgeschaltet. Der über die Hälfte ASN₁ geleitete Verkehr wird dann unterbrochen. Die über die redundant zugeordnete erste Hälfte z.B. ASN₀ geleiteten Zellenströme werden vom Algorithmus RPC weitergeleitet. Sind die neuen Baugruppen der zweiten Hälfte ASN₁ installiert, werden die Baugruppen der zweiten Hälfte ASN₁ schrittweise getestet und aktiviert. Sobald alle Baugruppen der zweiten Hälfte aktiv sind, wird der Verkehr wieder über beide Hälften übertragen.

Wesentlich ist nun, daß das Koppelfeld derart gewechselt wird, daß die Routingadressen bei der Erweiterung unverändert bleiben können. Hierzu wird die Routingadresse für eine entsprechend kleine Konfiguration so vergeben, als wäre die kleine Konfiguration Teil der größten Konfiguration. Dies erfolgt dadurch, daß vom Personal eine ensprechende Verdrahtung vorgenommen wird. Damit bleiben die Adressen gleich. Unter Ausnutzung der Redundanz ist damit eine unterbrechungsfreie Erweiterung des Koppelnetzes mit der zugeordneten statistischen Multiplexeinheit möglich.

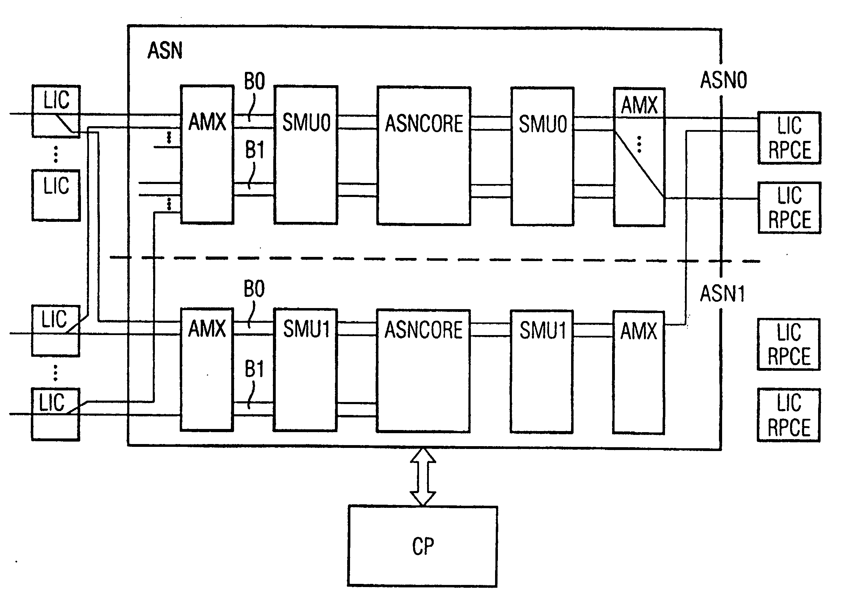

## Patentansprüche

1. Verfahren zum unterbrechungsfreien Erweitern des Koppelfeldes eines Kommunikationssystems, mit
einem redundant ausgebildeten, eine Mehrzahl von Koppelfeldbaugruppen aufweisenden Koppelfeld (ASN), über das eine Mehrzahl von ATM-Zellen aufweisende Zellenströme nach Maßgabe einer dem Zellenkopf vorangestellten Routingadresse geleitet werden, die einen vorgegebenen Bedarf an Speicherplatz einnimmt, wobei über einem System Split die alten Koppelfeldbaugruppen schrittweise durch neue Koppelfeldbaugruppen ersetzt werden, wobei die neuen Koppelfeldbaugruppen soweit sie Wege zum gleichen Ausgang schalten wie die alten Koppelfeldgruppen, diese Wege über gleiche Routingadressen adressierbar sind,
**dadurch gekennzeichnet,**
**daß** zusätzlicher Speicherplatz zum Speichern der Routingadresse für den größten gewünschten Koppelfeldausbau sowohl in der Headertranslationtabelle als auch im Zellenkopf einer jeden ATM-Zelle vorgehalten wird, indem der eigentlichen Adresse eine oder mehrere Nullen vorangestellt werden, und
**daß** der zusätzliche Speicherplatz mit den neuen Routingadressen für die Wege über das erweiterte Koppelfeld beschrieben wird.

2. Verfahren nach Anspruch 1,
**dadurch gekennzeichnet,**
**daß** der System Split vorgenommen wird, indem die eine Hälfte (ASN₀) des alten Koppelfeldes abgeschaltet wird und durch eine neue Koppelfeldhälfte ersetzt wird, wobei die Zellenströme über die verbleibende Hälfte (ASN₁) des alten Koppelfeldes geleitet werden, und
**daß** nach erfolgtem Auswechseln die abgeschaltete Hälfte mit dem neuen Koppelfeld wieder in Betrieb genommen wird, wodurch eine Hälfte des Koppelfeldes mit einer neuen Koppelfeldhälfte und die verbleibende Hälfte mit einem alten Koppelfeld betrieben wird,
**daß** im Anschluß daran die verbleibende Hälfte des alten Koppelfeldes (ASN₁) abgeschaltet wird und durch eine neue Koppelfeldhälfte ersetzt wird, wobei die Zellenströme über die Hälfte (ASN₀) des bereits neuen Koppelfeldes geleitet werden, daß nach erfolgtem Auswechseln die die verbleibende Hälfte (ASN₁) mit dem neuen Koppelfeld wieder in Betrieb genommen wird.

3. Verfahren nach Anspruch 1, 2
**dadurch gekennzeichnet,**
**daß** in eingangsseitigen Schnittstelleneinrichtungen (LIC) dem Zellenkopf einer jeden ATM-Zelle ein interner Zellenkopf vorangestellt wird, der der Aufnahme der Routingadressen dienlich ist, und der in ausgangsseitigen Schnittstelleneinrichtungen (LIC) wieder entommen wird.

4. Verfahren nach einem der vorstehenden Ansprüche,
**dadurch gekennzeichnet,**
**daß** in den eingangsseitigen Schnittstelleneinrichtungen (LIC) die ankommenden Zellenströme in 2 getrennte, identische Zellenströme (Z₀, Z₁) aufgespalten werden, indem ein erster Zellenstrom (Z₀) über die eine Hälfte des Koppelfeldes (ASN₀) und ein zweiter, mit dem ersten Zellenstrom identischer Zellenstrom (Z₁) über die verbleibende Hälfte des Koppelfeldes (ASN₁) nach Maßgabe der dem Zellenkopf vorangestellten Routingadresse zu den gleichen ausgangsseitigen Schnittstelleneinrichtungen (LIC) geleitet wird.

## Claims

1. Method for extending the switching matrix of a communication system without interruption, having
a switching matrix (ASN) which is in redundant form, has a plurality of switching matrix assemblies and via which a plurality of cell streams having ATM cells are routed as stipulated by a routing address placed in front of the cell header, said routing address taking up a prescribed memory space requirement, where a system split is used to replace the old switching matrix assemblies with new switching matrix assemblies in steps, and in the new switching matrix assemblies, insofar as they connect paths to the same output as the old switching matrix assemblies, these paths can be addressed using the same routing addresses,
**characterized**
**in that** additional memory space is reserved for storing the routing address of the largest required switching matrix extension both in the header translation table and in the cell header of each ATM cell by placing one or more zeros in front of the actual address, and
**in that** the new routing addresses for the paths via the extended switching matrix are written to the additional memory space.

2. Method according to Claim 1,
**characterized**
**in that** the system split is performed by disconnecting half (ASN₀) of the old switching matrix and replacing it with a new switching matrix half, the cell streams being routed via the remaining half (ASN₁) of the old switching matrix, and
**in that**, once the exchange has been made, the disconnected half is started up again using the new switching matrix, as a result of which one half of the switching matrix is operated using a new switching matrix half, and the remaining half is operated using an old switching matrix,
**in that**, next, the remaining half of the old switching matrix (ASN₁) is disconnected and is replaced with a new switching matrix half, the cell streams being routed via the half (ASN₀) of the switching matrix which is already new,
**in that**, once the exchange has been made, the remaining half (ASN₁) is started up again using the new switching matrix.

3. Method according to Claim 1, 2,
**characterized**
**in that**, in input-side interface devices (LIC), the cell header of each ATM cell has an internal cell header placed in front of it which is used to hold the routing addresses and is removed again in output-side interface devices (LIC).

4. Method according to one of the preceding claims,
**characterized**
**in that**, in the input-side interface devices (LIC), the arriving cell streams are split into 2 separate, identical cell streams (Z₀, Z₁) by dint of a first cell stream (Z₀) being routed via one half of the switching matrix (ASN₀), and a second cell stream (Z₁), which is identical to the first cell stream, being routed via the remaining half of the switching matrix (ASN₁) to the same output-side interface devices (LIC), as stipulated by the routing address placed in front of the cell header.

## Revendications

1. Procédé permettant l'extension sans interruption du réseau de connexion d'un système de communication, comprenant
un réseau de connexion (ASN) exécuté de manière redondante, présentant une pluralité de sous-groupes de réseaux de connexion, au moyen duquel des flux de cellule présentant une pluralité de cellules ATM sont transmis conformément à une adresse de routage placée en précédant l'en-tête de cellule, cette adresse de routage prenant un besoin prédéfini en espace mémoire, les anciens sous-groupes de réseaux de connexion étant remplacés progressivement par de nouveaux sous-groupes de réseaux de connexion au moyen d'une division de système, les nouveaux sous-groupes de réseau de connexion, dans la mesure où ils connectent des voies vers la même sortie de la même manière que les anciens sous-groupes de réseaux de connexion, ces voies étant adressables par l'intermédiaire d'adresses de routage identiques,
**caractérisé en ce que**
de l'espace mémoire supplémentaire est réservé pour mémoriser l'adresse de routage pour le plus grand élargissement souhaité de réseau de connexion aussi bien dans le tableau de translation d'en-têtes que dans l'en-tête de cellule de chacune des cellules ATM, en faisant précéder un ou plusieurs zéros à l'adresse proprement dite, et
**en ce que** l'espace mémoire supplémentaire est utilisé pour enregistrer les nouvelles adresses de routage pour les voies à travers le réseau de connexion.

2. Procédé selon la revendication 1,
**caractérisé en ce que**
la division du système est réalisée en déconnectant une moitié (ASN₀) de l'ancien réseau de connexion et en la remplaçant par une nouvelle moitié de réseau de connexion, les flux de cellule étant transmis au moyen de la moitié restante (ASN₁) de l'ancien réseau de connexion, et
**en ce que**, après la réalisation du remplacement, la moitié déconnectée est à nouveau mise en service avec le nouveau réseau de connexion, grâce à quoi une moitié du réseau de connexion est exploitée avec la nouvelle moitié de réseau de connexion et la moitié restante est exploitée avec un ancien réseau de connexion,
**en ce qu'**ensuite la moitié restante de l'ancien réseau de connexion (ASN₁) est déconnectée et remplacée par une nouvelle moitié de réseau de connexion, les flux de cellule étant transmis par la moitié (ASN₀) du réseau de connexion déjà nouveau,
**en ce que**, après la réalisation du remplacement, la moitié restante (ASN₁) est à nouveau mise en service avec le nouveau réseau de connexion.

3. Procédé selon la revendication 1, 2
**caractérisé en ce que**
dans des dispositifs d'interface (LIC) du côté entrée, un en-tête de cellule interne est placé devant l'en-tête de cellule de chacune des cellules ATM, cet en-tête de cellule interne servant à la réception des adresses de routage et étant à nouveau retiré dans des dispositifs d'interface (LIC) du côté sortie.

4. Procédé selon l'une quelconque des revendications précédentes,
**caractérisé en ce que**
dans les dispositifs d'interface (LIC) du côté entrée, les flux de cellule entrants sont divisés en deux flux de cellule (Z₀, Z₁) séparés identiques, du fait qu'un premier flux de cellule (Z₀) est transmis aux mêmes dispositifs d'interface (LIC) du côté sortie par l'intermédiaire de l'une des moitiés du réseau de connexion (ASN₀) et qu'un deuxième flux de cellule (Z₁), identique au premier flux de cellule, est transmis aux mêmes dispositifs d'interface (LIC) du côté sortie par l'intermédiaire de la moitié restante du réseau de connexion (ASN₁) conformément à l'adresse de routage précédant l'en-tête de cellule.
